# FASCICULE DE BREVET EUROPEEN

(11) **EP 1 951 506 B1**
(45) Date de publication et mention de la délivrance du brevet: **01.04.2009**
(21) Numéro de dépôt: 06831104.2
(22) Date de dépôt: 10.11.2006
(51) Int. Cl.: B29C 70/22, B29C 70/24, F16C 7/00

(54) **PROCEDE DE FABRICATION D'UNE CHAPE SUR UN ELEMENT STRUCTURAL EN MATERIAU COMPOSITE NOTAMMENT UNE BIELLE**
VERFAHREN ZUR HERSTELLUNG EINES GABELKOPFS AN EINEM AUS VERBUNDWERKSTOFF HERGESTELLTEN STRUKTURELEMENT, INSBESONDERE EINER VERBINDUNGSSTANGE
METHOD OF PRODUCING A STRAP ON A STRUCTURAL ELEMENT THAT IS MADE FROM A COMPOSITE MATERIAL, PARTICULARLY A CONNECTING ROD

(30) Priorité: 23.11.2005 FR 0511846
(43) Date de publication de la demande: 06.08.2008
(73) Titulaire: MESSIER-DOWTY S.A., 78140 Velizy Villacoublay (FR)
(72) Inventeur: DUNLEAVY, Patrick, F-91120 Palaiseau (FR)
(74) Mandataire: Parzy, Benjamin Alain
(86) Numéro de dépôt international: PCT/FR2006/002504
(87) Numéro de publication internationale: WO 2007/060305

(56) Documents cités:
- DE-A1- 3 726 340
- FR-A- 2 060 049
- FR-A- 2 705 610
- FR-A- 2 759 096
- US-A- 5 279 892
- US-A- 6 036 904

## Description

L'invention concerne procédé de fabrication d'une chape sur un élément structural en matériau composite, notamment une bielle.

### ARRIERE-PLAN DE L'INVENTION

On connaît des bielles comportant un corps creux en matériau composite, par exemple obtenu par enroulement filamentaire autour d'un mandrin ou encore par enroulement d'un pli de fibres tissées.

L'épaisseur du corps creux est obtenue en effectuant un nombre adéquat d'enroulements.

On connaît par ailleurs des bielles en composite dont le corps plein est réalisé par empilement de plis.

Il est connu de prévoir des extensions, soit de la paroi du corps creux, soit du corps plein, qui sont destinées à devenir des chapes. Après polymérisation du corps, il suffit de percer ces extensions et éventuellement de les détourer pour obtenir des chapes.

Cependant, l'épaisseur des chapes ainsi réalisées coïncide avec l'épaisseur de la paroi du corps creux ou l'épaisseur du corps plein. Or cette épaisseur peut ne pas être suffisante.

L'état de la technique est illustré par les documents FR 2 060 049, DE 37 26 340, FR 2 705 610, US 5 279 892, US 6 036 904 et FR 2 060 049.

### OBJET DE L'INVENTION

L'invention a pour objet de proposer une nouvelle manière de produire une ou des chapes sur un élément structural en matériau composite.

### BREVE DESCRIPTION DE L'INVENTION

En vue de la réalisation de ce but, il est proposé un procédé de fabrication d'une chape sur un élément structural en matériau composite fait au moins localement d'un empilement de plis primaires de fibres composites définissant au moins une extension destinée à former la chape, caractérisé en ce qu'il comporte l'étape de désolidariser les plis primaires au moins au niveau de l'extension et d'intercaler des plis intercalaires entre les plis primaires.

Ainsi, l'épaisseur de l'extension n'est plus liée à l'épaisseur de l'élément structural. On peut notamment épaissir l'extension pour obtenir une chape d'une épaisseur adéquate.

### BREVE DESCRIPTION DES DESSINS

L'invention sera mieux comprise à la lumière de la description qui suit en référence aux figures des dessins annexés parmi lesquelles :
- la figure 1 est une vue en perspective d'une bielle obtenue selon le procédé de l'invention;
- la figure 2 est une vue de face d'un patron découpé pour fabriquer une bielle selon l'intention
- la figure 3 est une section selon la ligne III-III du corps de bielle de la figure 1 ;
- la figure 4 est une vue partielle du paturon de la figure 1 vu en tranche ;
- la figure 5 est une vue en coupe selon la ligne V-V de la figure 1;
- la figure 6 est vue schématique d'un tissu à plusieurs plis liés utilisé pour la mise en oeuvre du procédé de l'invention;

### DESCRIPTION DETAILLEE DE L'INVENTION

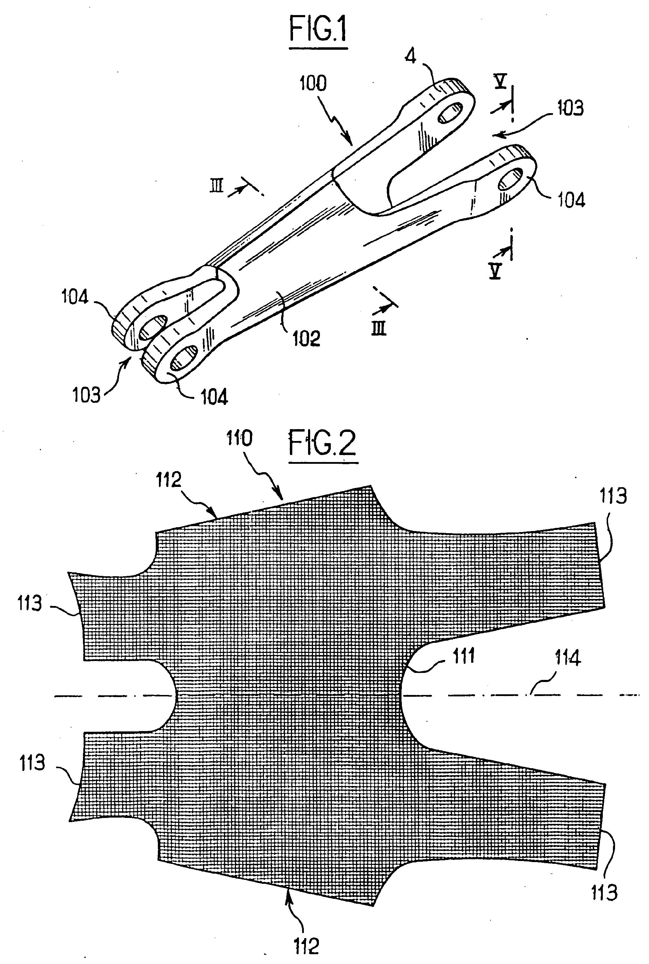

En référence à la figure 1, le procédé de l'invention permet d'obtenir une bielle 100 intégralement en composite comportant un corps tubulaire 102 portant deux fourches 103 comprenant chacune deux chapes 104 en regard.

Selon un aspect particulier de l'invention illustré à la figure 2, on commence par découper dans un tissu de fibres, par exemple ici des fibres de carbone, un patron 110 comportant une partie centrale 111 qui comporte deux bords opposés 112 et de laquelle s'étendent quatre extensions 113 à raison de deux extensions de chaque côté de la partie centrale 111, de part et d'autre d'un axe de symétrie 114 du patron.

Le tissu de fibres est de préférence un tissu dit "2,5 D", comportant plusieurs plis primaires de fibres de trame reliées entre elles par des fibres de chaîne qui s'étendent d'un pli primaire à l'autre pour lier les plis entre eux. Une telle liaison entre les plis primaires permet de les solidariser entre eux tout en permettant un glissement relatif des plis primaires lors de la mise en forme du patron.

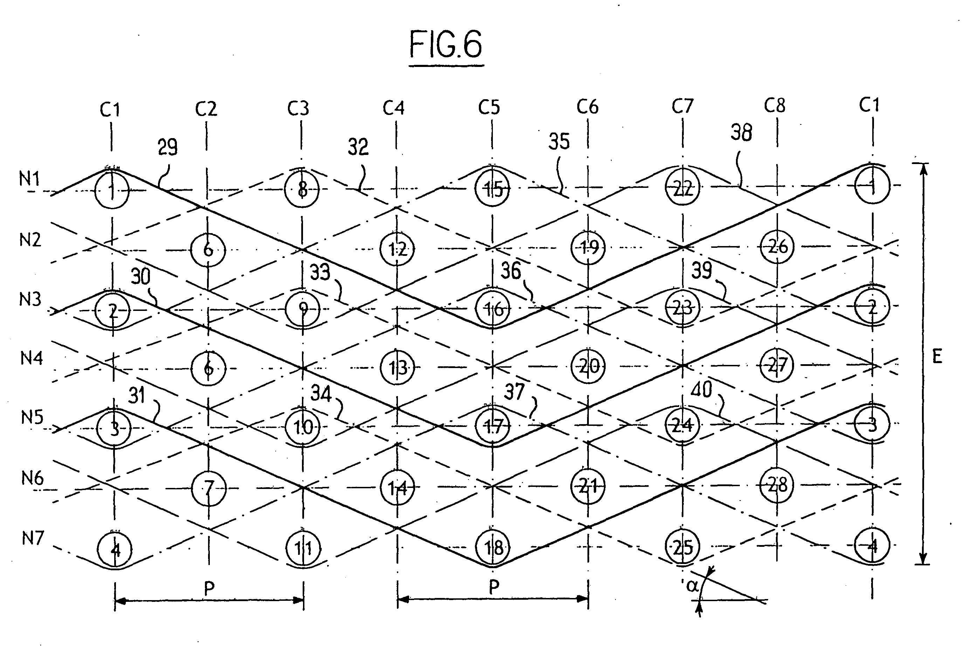

A cet égard, le tissu préféré est le tissu présenté dans le document FR 2 759 096, et décrit cri-dessous en relation avec la figure 6. Le tissu comporte une armure de base qui est constituée:
- d'une part par au moins vingt-huit fibres de trame 1 à 28 réparties en au moins huit colonnes C1 à C8 s'étendant chacune dans le sens de l'épaisseur E du tissu, et disposées en quinconce avec une alternance de colonnes C2, C4, C6, C8 d'au moins trois fibres de trame superposées séparées par un pas P déterminé, et de colonnes C1, C3, C5, C7 d'au moins quatre fibres de trame superposées séparées par le même pas P, les fibres de trame 1 à 28 s'étendant pour définir au moins sept plis primaires N1 à N7;
- et d'autre part, par au moins douze fibres de chaîne 29 à 40 disposées dans au moins quatre plans parallèles P1, P2, P3, P4, décalés dans le sens des fibres de trame, chaque plan contenant trois fibres de chaîne parallèles superposées agencées dans chacun de ces plans de la façon suivante :
   - une première fibre de -chaîne (resp. 29, 32, 35, 38) relie la fibre de trame extrême supérieure (resp. 1, 8, 15, 22) d'une colonne (resp. C1, C3, C5, C7) à quatre fibres de trame, à une fibre de trame intermédiaire supérieure (resp. 16, 23, 2, 9) d'une colonne (resp. C5, C7, C1, C3) à quatre fibres de trame qui est espacée de la précédente colonne par au moins deux pas P, la première fibre de chaîne revenant sur une fibre de trame extrême supérieure (resp. 1, 8, 15, 22) d'une colonne (resp. C1, C3, C5, C7) à quatre fibres de trame qui est espacée de la première colonne par au moins quatre pas P;
   - une deuxième fibre de chaîne (resp. 30, 33, 36, 39) reliant une fibre de trame intermédiaire supérieure (résp. 2, 9, 16, 23) d'une colonne (resp. C1, C3, C5, C7) à quatre fibres de trame, à une fibre de trame intermédiaire inférieure (resp. 17, 24, 3, 10) d'une colonne (resp. C5, C7, C1, C3) à quatre fibres de trame qui est espacée de la précédente colonne par au moins deux pas P, la deuxième fibre de chaîne revenant sur une fibre de trame intermédiaire supérieure (resp. 2, 9, 16, 23) d'une colonne (resp. C1, C3, C5, C7) à quatre fibres de trame qui est espacée de la première colonne par au moins quatre pas P;
   - une troisième fibre de chaîne (resp. 31, 34, 37, 40) reliant une fibre de trame intermédiaire inférieure (resp. 3, 10, 17, 24) d'une colonne (resp. C1, C3, C5, C7) à quatre fibres de trame à la fibre de trame extrême inférieure (resp. 18, 25, 4, 11) d'une colonne (resp. C5, C7, C1, C3) à quatre fibres de trame espacée de la précédente colonne par au moins deux pas P, la troisième fibre de chaîne revenant sur une fibre de trame intermédiaire inférieure (resp. 3, 10, 17, 24) d'une colonne (resp. C1, C3, C5, C7) à quatre fibres de trame qui est espacée de la première colonne par au moins quatre pas P.

Les positions des fibres de chaîne parallèles (resp. 29, 30, 31 ; 32, 33, 34 ; 35, 36, 37 ; 38, 39, 40) sont décalées longitudinalement d'un pas P d'un plan à un autre. On a représenté en traits continus les fibres de chaîne 29,30,31 du plan P1, en traits interrompus courts les fibres de chaîne 23,33,34 du plan P2, en traits mixtes les fibres de chaîne 35,36,37 du plan P3, et enfin en traits interrompus longs les fibres de chaîne 38,39,40 du plan P4. Le décalage est particulièrement visible.

En revenant maintenant à la figure 2, le patron 110 est découpé dans ledit tissu de sorte que les fibres de trame s'étendent selon l'axe de symétrie 114 du patron 110.

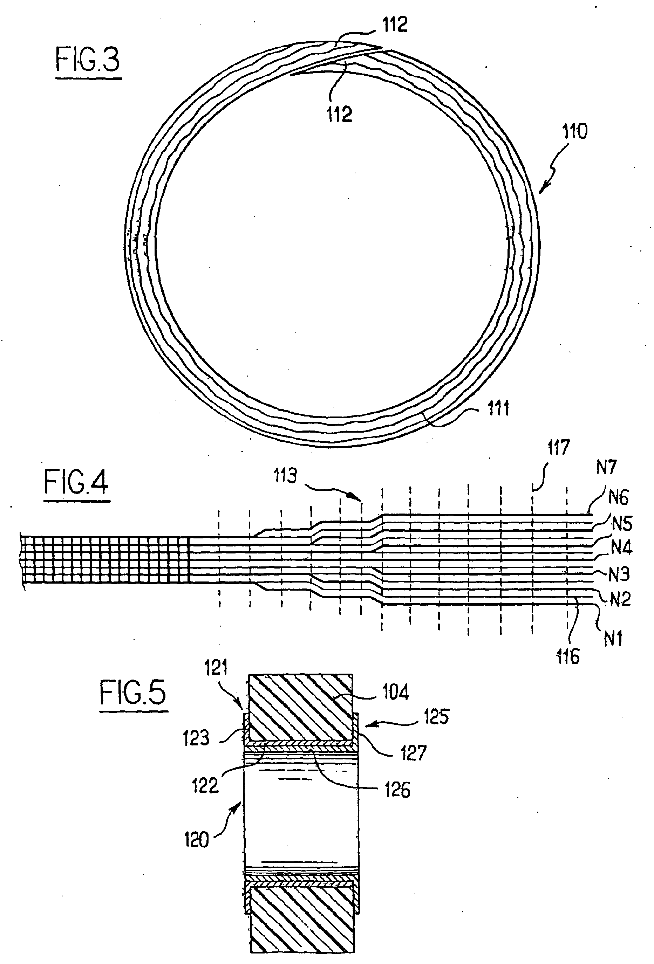

Selon un aspect particulier de l'invention, on forme alors le patron 110 en tube en rapprochant les bords 112. Comme cela est schématiquement représenté à la figure 3, les plis primaires du tissu glissent entre eux, le glissement étant nul au niveau de l'axe de symétrie 114 et maximal au niveau des bords 112 de sorte que ces derniers prennent une forme en biseau.

On rapporte alors les bords 112 les uns sur les autres. De préférence, la tranche de l'un des bords 112 vient en appui contre la face interne du patron 110, de façon que l'épaisseur du tube ainsi formé soit, dans la zone de jointure, sensiblement constante.

Les bords 112 n'étant ici pas parallèles, on obtient une partie tubulaire de forme conique. Mais on pourrait de la même façon obtenir une partie tubulaire cylindrique en découpant le patron 110 avec des bords 112 parallèles.

Selon un aspect particulier de l'invention illustré à la figure 4, on retire dans l'extrémité des extensions 113 les fibres de chaîne pour désolidariser les plis primaires formés par les fibres de trame. On obtient ainsi des plis primaires N1 à N7 (vus ici en tranche et illustrés en traits épais) pouvant être écartés les uns des autres. Entre chacun des plis primaires, des plis intercalaires 116 (illustrés en traits fins, un seul pli intercalaire étant référencé) sont insérés de façon que les fibres qui composent les plis intercalaires 116 s'étendent obliquement, de préférence à 45 degrés, par rapport aux fibres de trame composant les plis primaires N1 à N7.

De préférence, les plis intercalaires 116 sont disposés de façon à donner aux extensions 113 une épaisseur qui varie progressivement pour arriver en extrémité à une épaisseur constante sensiblement double de celle du tissu. Pour ce faire, on choisit d'insérer des plis intercalaires 116 dont la longueur augmente de part et d'autre d'un plan central de l'extension 113 au fur et à mesure que l'on s'éloigne dudit plan.

Puis on introduit au travers des plis primaires N1 à N7 et des plis intercalaires 116 des fibres transverses 117 (représentées en pointillés, une seule fibre transverse étant référencée) pour renforcer les extrémités des extensions 113. On confère ainsi aux dites extrémités une structure en trois dimensions particulièrement résistante qui empêche les plis de glisser les uns sur les autres. De préférence, l'introduction des fibres transverses se fait par couture.

Le patron muni de ses plis intercalaires est mis en forme sur un mandrin (non représenté). Puis, par une technique connue en soi (procédé dit RTM ou resin transfer molding), on diffuse de la résine dans les fibres du patron muni de ses plis intercalaires.

La liaison des bords 112 qui se recouvrent est ainsi assurée par la résine. Le recouvrement des biseaux offre une grande surface d'adhésion entre les deux bords 112, de sorte que la jointure (visible à la figure 1) est très solide et rend la bielle apte à résister à des sollicitations de tension et de compression.

On obtient alors un corps tubulaire solide avec, de chaque côté, deux bras d'épaisseur augmentée formés par les extensions qui s'étendent en regard deux par deux. Il reste alors à détourer les bras et les percer pour transformer les bras en chapes 104. On obtient la bielle réalisée intégralement en composite de la figure 1.

De préférence, et ainsi que cela est illustré à la figure 5, on munit les chapes de doubles bagues 120 comportant chacune une première bague 121 ayant d'une part une partie cylindrique 122 qui s'étend dans l'un des perçages des chapes 4 et d'autre part une collerette 123 qui s'étend contre l'un des flancs de la chape 4, et une seconde bague 25 ayant d'une part une partie cylindrique 126 qui s'étend avec serrage dans la partie cylindrique 122 de la première bague 121 et d'autre part une collerette 127 qui prend appui sur l'extrémité de ladite partie cylindrique 122. De préférence, la longueur de ladite partie cylindrique 122 est très légèrement inférieure à la largeur de la chape 104 de sorte que celle-ci est légèrement pincée entre les collerettes 123 et 127.

Une telle bielle peut avantageusement être utilisée pour constituer des contrefiches briseuses d'atterrisseur. En effet, de telles contrefiches comportent deux éléments de bielles articulées entre elles qui travaillent essentiellement en traction/compression, de sorte que la bielle de l'invention peut avantageusement être utilisée dans cette application. En outre, on sait que de telles contrefiches peuvent être soumises à des impacts, par exemple de cailloux projetés par les pneumatiques. Le tissu "2,5 D" utilisé est justement connu pour sa grande résistance aux impacts et au délaminage.

Des dimensionnements ont permis de montrer que le gain de masse par rapport à des contrefiches métalliques est significatif. En outre, le temps de fabrication est considérablement réduit.

L'invention n'est pas limitée à ce qui vient d'être décrit, mais bien au contraire englobe toute variante entrant dans le cadre défini par les revendications.

En particulier, bien que l'on ait décrit l'utilisation d'un tissu particulier tel que décrit en relation avec la figure 6, on pourra utiliser un tissu similaire comportant un nombre plus important de plis, ou encore d'autres tissus permettant un glissement relatif de plis. On peut obtenir un tel tissu en superposant des plis et en les cousant en eux de façon lâche.

Pour renforcer la jointure bord à bord, on pourra coudre les deux bords avant polymérisation.

Bien que l'on ait illustré le procédé de l'invention en relation avec une bielle, on pourra appliquer le procédé de l'invention sur tout autre élément structural en matériau composite.

## Revendications

1. Procédé de fabrication d'une chape sur un élément structural en matériau composite fait au moins localement d'un empilement de plis primaires (N1...N7) de fibres composites définissant au moins une extension (113) destinée à former la chape, **caractérisé en ce qu'**il comporte l'étape de désolidariser les plis primaires au moins au niveau de l'extension et d'intercaler des plis intercalaires (116) entre les plis primaires.

2. Procédé selon la revendication 1, dans lequel les plis intercalaires (116) ont des fibres qui sont orientées obliquement par rapport aux fibres de trame formant les plis primaires (N1...N7) au niveau de l'extension.

3. Procédé selon la revendication 1, dans lequel des fibres transverses (117) sont insérées au travers des plis primaires et des plis intercalaires.

4. Procédé selon la revendication 1, dans lequel on intercale des plis intercalaires (116) ayant une largeur qui augmente de part et d'autre d'un plan central de l'extension (113) au fur et à mesure que l'on s'éloigne dudit plan (113).

5. Procédé selon la revendication 1, dans lequel, après injection de résine et polymérisation, les extensions sont percées pour former des chapes (104).

6. Procédé selon la revendication 5, dans lequel les perçages sont équipés de doubles bagues (120).

7. Procédé selon la revendication 1, dans lequel l'extension est une partie d'un patron (110) présentant deux bords opposés (112) découpé dans un tissu de fibres composites formé par les plis primaires (N1..N7) superposés et liés entre eux de sorte que les plis puissent glisser relativement l'un à l'autre, le patron étant roulé en tube pour former un corps de l'élément structural de sorte que les plis primaires glissent entre eux pour donner aux deux bords une forme en biseau, les bords en biseau étant joints de sorte qu'ils se recouvrent.

8. Procédé selon la revendication 7, dans lequel le patron est découpé dans un tissu comprenant une armure de base qui est constituée :
- d'une part par au moins vingt-huit fibres de trame (1 à 28) réparties en au moins huit colonnes (C1 à C8) s'étendant chacune dans le sens de l'épaisseur (E) du tissu, et disposées en quinconce avec une alternance de colonnes (C2, C4, C6, C8) d'au moins trois fibres de trame superposées séparées par un pas P déterminé, et de colonnes (C1, C3, C5, C7) d'au moins quatre fibres de trame superposées séparées par le même pas (P), les fibres de trame (1 à 28) s'étendant pour définir au moins sept plis primaires (N1 à N7);
- et d'autre part, par au moins douze fibres de chaîne (29 à 40) disposées dans au moins quatre plans parallèles (P1, P2, P3, P4), décalés dans le sens des fibres de trame, chaque plan contenant trois fibres de chaîne parallèles superposées agencées dans chacun de ces plans de la façon suivante :
- une première fibre de chaîne (resp. 29, 32, 35, 38) relie la fibre de trame extrême supérieure (resp. 1, 8, 15, 22) d'une colonne (resp. C1, C3, C5, C7) à quatre fibres de trame, à une fibre de trame intermédiaire supérieure (resp. 16, 23, 2, 9) d'une colonne (resp. C5, C7, C1, C3) à quatre fibres de trame qui est espacée de la précédente-colonne par au moins deux pas (P), la première fibre de chaîne revenant sur une fibre de trame extrême supérieure (resp. 1, 8, 15, 22) d'une colonne (resp. C1, C3, C5, C7) à quatre fibres de trame qui est espacée de la première colonne par au moins quatre pas (P);
- une deuxième fibre de chaîne (resp. 30, 33, 36, 39) reliant une fibre de trame intermédiaire supérieure (resp. 2, 9, 16, 23) d'une colonne (resp. C1, C3, C5, C7) à quatre fibres de trame, à une fibre de trame intermédiaire inférieure (resp. 17, 24, 3, 10) d'une colonne (resp. C5, C7, C1, C3) à quatre fibres de trame qui est espacée de la précédente colonne par au moins deux pas (P), la deuxième fibre de chaîne revenant sur une fibre de trame intermédiaire supérieure (resp. 2, 9, 16, 23) d'une colonne (resp. C1, C3, C5, C7) à quatre fibres de trame qui est espacée de la première colonne par au moins quatre pas (P);
- une troisième fibre de chaîne (resp. 31, 34, 37, 40) reliant une fibre de trame intermédiaire inférieure (resp. 3, 10, 17, 24) d'une colonne (resp. C1, C3, C5, C7) à quatre fibres de trame à la fibre de trame extrême inférieure (resp. 18, 25, 4, 11) d'une colonne (resp. C5, C7, C1, C3) à quatre fibres de trame espacée de la précédente colonne par au moins deux pas (P), la troisième fibre de chaîne revenant sur une fibre de trame intermédiaire inférieure (resp. 3, 10, 17, 24) d'une colonne (resp. C1, C3, C5, C7) à quatre fibres de trame qui est espacée de la première colonne par au moins quatre pas (P);
les positions des fibres de chaîne parallèles (resp. 29, 30, 31 ; 32, 33, 34 ; 35, 36, 37 ; 38, 39, 40) étant décalées longitudinalement d'un pas P d'un plan à un autre.

9. Procédé selon la revendication 7, dans lequel le patron comporte un axe de symétrie (114) et est découpé dans ledit tissu de sorte que les plis aient des fibres de trame qui s'étendent selon l'axe de symétrie.

10. Procédé selon la revendication 7, dans lequel le patron est découpé de sorte qu'il présente au moins deux extensions (113) qui viennent en regard l'une de l'autre lorsque le patron est formé en tube.

## Claims

1. A method of fabricating a lug on a structural element of composite material made at least locally out of a stack of primary plies (N1, ..., N7) of composite fibers defining at least one extension (113) for forming the lug, the method being **characterized in that** it includes the step of separating the primary plies at least in the extension and of inserting intermediate plies (116) between the primary plies.

2. A method according to claim 1, in which the intermediate plies have fibers that are oriented obliquely relative to the weft fibers forming the primary plies in the extension.

3. A method according to claim 1, in which transverse fibers (117) are inserted through the primary plies and the intermediate plies.

4. A method according to claim 1, in which intermediate plies (116) are inserted that are of lengths that increase with increasing distance on either side of a central plane of the extension (113).

5. A method according to claim 1, in which, after resin has been injected and polymerized, the extensions are pierced to form lugs (104) of coupling forks.

6. A method according to claim 5, in which the holes pierced are fitted with pairs of rings (120).

7. A method according to claim 1, in which the extension forms part of a pattern (110) presenting two opposite edges (112) cut out from a composite fiber fabric made up of superposed primary plies (N1, ..., N7) bonded together in such a manner that the plies can slide relative to one another, the pattern being rolled into a tube to form a body of the structural element in such a manner that the primary plies slide relative to one another to give a chamfer shape to the two edges, the chamfer-shaped edges being joined so that they overlap.

8. A method according to claim 7, in which the pattern is cut from a fabric comprising a base weave which is constituted:
· firstly by at least twenty-eight weft fibers (1 to 28) organized in at least eight columns (C1 to C8) each extending in the thickness direction (E) of the fabric, and disposed in a staggered configuration with alternation between columns (C2, C4, C6, C8) having at least three superposed weft fibers spaced apart at a predetermined pitch (P), and columns (C1, C3, C5, C7) having at least four superposed weft fibers spaced apart by the same pitch (P), the weft fibers (1 to 28) extending to define at least seven primary plies (N1 to N7); and
· secondly, by at least twelve warp fibers (29 to 40) disposed in at least four parallel planes (P1, P2, P3, P4) that are offset in the weft fiber direction, each plane containing three superposed parallel warp fibers arranged in each of these planes as follows:
· a first warp fiber (respectively numbered 29, 32, 35, 38) connects the topmost warp fiber (1, 8, 15, 22) of a four-weft fiber column (C1, C3, C5, C7) to an upper intermediate weft fiber (16, 23, 2, 9) of a four-weft fiber column (C5, C7, C1, C3) that is spaced apart from the preceding column by at least two pitch steps (P), the first warp fiber returning over a top end weft fiber (1, 8, 15, 22) of a four-weft fiber column (C1, C3, C5, C7) that is spaced apart from the first column by at least four pitch steps (P);
· a second warp fiber (respectively numbered 30, 33, 36, 39) connecting a top intermediate weft fiber (2, 9, 16, 23) of a four-weft fiber column (C1, C3, C7) to a lower intermediate weft fiber (17, 24, 3, 10) of a four-weft fiber column (C5, C7, C1, C3) that is spaced apart from the preceding column by at least two pitch steps (P), the second warp fiber returning over an upper intermediate weft fiber (2, 9, 16, 23) of a four-weft fiber column (C1, C3, C5, C7) that is spaced apart from the first column by at least four pitch steps (P); and
· a third warp fiber (respectively numbered 31, 34, 37, 40) connecting a lower intermediate weft fiber (3,10, 17, 24) of a four-weft fiber column (C1, C3, C5, C7) to the bottommost weft fiber (18, 25, 4, 11) of a four-weft fiber column (C5, C7, C1, C3) spaced apart from the preceding column by at least two pitch steps (P), the third warp fiber returning over a lower intermediate weft fiber (3, 10, 17, 24) of a four-weft fiber column (C1, C3, C5, C7) that is spaced apart from the first column by at least four pitch steps (P);
the positions of the parallel warp fibers (29, 30, 31; 32, 33, 34; 35, 36, 37; 38, 39, 40) being offset longitudinally by one pitch step (P) from one plane to another.

9. A method according to claim 7, in which the pattern has an axis of symmetry (114) and is cut out from said fabric in such a manner that the primary plies have weft fibers that extend along the axis of symmetry.

10. A method according to claim 7, in which the pattern is cut out in such a manner that it presents at least two extensions (113) that come to face each other when the pattern is formed into a tube.

## Patentansprüche

1. Verfahren zur Herstellung eines Gabelkopfes an einem Strukturelement aus Verbundwerkstoff, das mindestens lokal aus einem Stapel von primären Lagen (N1...N7) aus Verbundfasern hergestellt ist, der mindestens einen Fortsatz (113) definiert, der dazu bestimmt ist, den Gabelkopf zu bilden, **dadurch gekennzeichnet, dass** es den Schritt des Trennens der primären Lagen mindestens im Bereich des Fortsatzes und des Einfügens von Zwischenlagen (116) zwischen die primären Lagen umfasst.

2. Verfahren nach Anspruch 1, wobei die Zwischenlagen (116) Fäden haben, die relativ zu den Schussfäden, welche die primären Lagen (N1...N7) im Bereich des Fortsatzes bilden, schräg ausgerichtet sind.

3. Verfahren nach Anspruch 1, wobei Querfäden (117) durch die primären Lagen und die Zwischenlagen hindurch eingefügt werden.

4. Verfahren nach Anspruch 1, wobei Zwischenlagen (116) eingefügt werden, die eine Breite haben, die zu beiden Seiten einer zentralen Ebene des Fortsatzes (113) in dem Maße zunimmt, wie man sich von der genannten Ebene (113) entfernt.

5. Verfahren nach Anspruch 1, wobei nach dem Einspritzen von Harz und der Polymerisation die Fortsätze durchbohrt werden, um Gabelköpfe (104) auszubilden.

6. Verfahren nach Anspruch 5, wobei die Durchbohrungen mit Doppelringen (120) versehen werden.

7. Verfahren nach Anspruch 1, wobei der Fortsatz ein Teil eines Schnittmusters (110) ist, das zwei gegenüberliegende Ränder (112) aufweist und aus einem Gewebe aus Verbundfasern ausgeschnitten ist, das durch die primären Lagen (N1...N7) gebildet ist, die derart übereinander angeordnet und miteinander verbunden sind, dass die Lagen relativ zueinander gleiten können, wobei das Schnittmuster zu einem Rohr gerollt wird, um einen Körper des Strukturelements zu bilden, derart, dass die primären Lagen relativ zueinander gleiten, um den beiden Rändern eine abgeschrägte Form zu verleihen, wobei die abgeschrägten Ränder derart verbunden werden, dass sie sich überdecken.

8. Verfahren nach Anspruch 7, wobei das Schnittmuster aus einem Gewebe ausgeschnitten wird, das eine Grundbindung umfasst, die gebildet ist:
- einerseits aus mindestens 28 Schussfäden (1 bis 28), die auf mindestens acht Säulen (C1 bis C8) verteilt sind, die sich jeweils in Richtung der Dicke (E) des Gewebes erstrecken und abwechselnd angeordnet sind, mit einem Wechsel aus Säulen (C2, C4, C6, C8) von mindestens drei übereinander angeordneten Schussfäden, wobei die Säulen durch einen vorgegebenen Abstand (P) voneinander getrennt sind, und aus Säulen (C1, C3, C5, C7) von mindestens vier übereinander angeordneten Schussfäden, wobei die Säulen durch den gleichen Abstand (P) voneinander getrennt sind, wobei sich die Schussfäden (1 bis 28) derart erstrecken, dass sie mindestens sieben primäre Lagen (N1 bis N7) definieren,
- und andererseits aus mindestens zwölf Kettfäden (29 bis 40), die in mindestens vier parallelen Ebenen (P1, P2, P3, P4) angeordnet sind, die in Richtung der Schussfäden versetzt sind, wobei jede Ebene drei parallele übereinander angeordnete Kettfäden enthält, die in jeder dieser Ebenen auf folgende Weise angeordnet sind:
- ein erster Kettfaden (resp. 29, 32, 35, 38) verbindet den allerobersten Schussfaden (resp. 1, 8, 15, 22) einer vier Schussfäden umfassenden Säule (resp. C1, C3, C5, C7) mit einem oberen mittleren Schussfaden (resp. 16, 23, 2, 9) einer vier Schussfäden umfassenden Säule (resp. C5, C7, C1, C3), die zu der vorhergehenden Säule um mindestens zwei Abstände (P) beabstandet ist, wobei der erste Kettfaden zu einem allerobersten Schussfaden (resp. 1, 8, 15, 22) einer vier Schussfäden umfassenden Säule (resp. C1, C3,C5, C7) zurückkehrt, die zu der ersten Säule um mindestens vier Abstände (P) beabstandet ist,
- ein zweiter Kettfaden (resp. 30, 33, 36, 39), der einen oberen mittleren Schussfaden (resp. 2, 9, 16, 23) einer vier Schussfäden umfassenden Säule (resp. C1, C3, C5, C7) mit einem unteren mittleren Schussfaden (resp. 17, 24, 3, 10) einer vier Schussfäden umfassenden Säule (resp. C5, C7, C1, C3) verbindet, die zu der vorhergehenden Säule um mindestens zwei Abstände (P) beabstandet ist, wobei der zweite Kettfaden zu einem oberen mittleren Schussfaden (resp. 2, 9, 16, 23) einer vier Schussfäden umfassenden Säule (resp. C1, C3, C5, C7) zurückkehrt, die zu der ersten Säule um mindestens vier Abstände (P) beabstandet ist,
- einen dritten Kettfaden (resp. 31, 34, 37, 40), der einen unteren mittleren Schussfaden (resp. 3, 10, 17, 24) einer vier Schussfäden umfassenden Säule (resp. C1, C3, C5, C7) mit dem alleruntersten Schussfaden (resp. 18, 25, 4, 11) einer vier Schussfäden umfassenden Säule (resp. C5, C7, C1, C3) verbindet, die von der vorhergehenden Säule um mindestens zwei Abstände (P) beabstandet ist, wobei der dritte Kettfaden zu einem unteren mittleren Schussfaden (resp. 3, 10, 17, 24) einer vier Schussfäden umfassenden Säule (resp. C1, C3, C5, C7) zurückkehrt, die zu der ersten Säule um mindestens vier Abstände (P) beabstandet ist,
wobei die Positionen der parallelen Kettfäden (resp. 29, 30, 31; 32, 33, 34; 35, 36, 37; 38, 39, 40) von einer Ebene zu einer anderen in Längsrichtung um einen Abstand (P) versetzt sind.

9. Verfahren nach Anspruch 7, wobei das Schnittmuster eine Symmetrieachse (114) hat und aus dem genannten Gewebe derart ausgeschnitten ist, dass die Lagen Schussfäden haben, die sich entlang der Symmetrieachse erstrecken.

10. Verfahren nach Anspruch 7, wobei das Schnittmuster derart ausgeschnitten ist, dass es mindestens zwei Fortsätze (113) aufweist, die einander gegenüberstehen, wenn das Schnittmuster zu einem Rohr geformt wird.
